# EUROPÄISCHE PATENTSCHRIFT

(11) **EP 0 565 000 B1**
(45) Veröffentlichungstag und Bekanntmachung des Hinweises auf die Patenterteilung: **22.07.1998**
(21) Anmeldenummer: 93105520.6
(22) Anmeldetag: 02.04.1993
(51) Int. Cl.: A22B 7/00, B65G 47/51

(54) **Verfahren und Vorrichtung zur Beschickung und Entleerung eines Stapelgleises**
Method and device for supplying and clearing a buffer conveyor
Méthode et appareil pour remplir et vider un convoyeur de stockage

(30) Priorität: 07.04.1992 DE 4211682
(43) Veröffentlichungstag der Anmeldung: 13.10.1993
(73) Patentinhaber: Banss Schlacht- und Fördertechnik GmbH, 35216 Biedenkopf (DE)
(72) Erfinder: Runkel, Gerhard, D-6347 Angelburg-Gönnern (DE)
(74) Vertreter: Klunker . Schmitt-Nilson . Hirsch

(56) Entgegenhaltungen:
- EP-A- 0 273 154
- EP-A- 0 310 102
- EP-A- 0 516 970
- FR-A- 2 656 980
- GB-A- 2 239 640
- JP-A- 5 953 315

## Beschreibung

Die vorliegende Erfindung betrifft ein Verfahren zur Beschickung (Einfördern) und Entleerung (Ausfördern) eines Stapelgleises einer zumindest ein Stapelgleis aufweisenden Stapelgleisanordnung zur zwischenlagernden Aufnahme von einem Zubringförderer zu einem Abzugsförderer geförderter Förderobjekte, insbesondere von in einem Aufbewahrungsbereich eines Schlachthofs zwischenzulagernden Schlachttierkörpern odeer Schlachttierkörperteilen (Schlachtstücke),
wobei eine Förderung der auf einem Stapelgleis angeordneten Schlachtstücke mittels umlaufender Mitnehmer einer Förderrichtung (Stapelgleisförderer) erfolgt,
und die einzufördernden Schlachtstücke mittels eines ersten Übergangsförderers (Einförderer) vom Zubringförderer auf das Stapelgleis sowie die auszufördernden Schlachtstücke mittels eines zweiten übergangsförderers (Ausförderer)
vom Stapelgleis auf den Abzugsförderer übergeben werden.

Desweiteren betrifft die Erfindung eine Vorrichtung zur Durchführung des Verfahrens.

Zur zwischenlagernden Aufbewahrung von Schlachtstücken in einem als Kühlraum ausgebildeten Aufbewahrungsbereich eines Schlachthofs ist es bekannt, die für den Versand bestimmten Schlachtstücke in einer aus einer Vielzahl von einzelnen Stapelgleisen bestehenden Stapelgleisanordnung zu lagern, wobei die einzelnen Stapelgleise über einen in den Kühlraum führenden Zubringförderer beschickt und über einen aus dem Kühlraum führenden Abzugsförderer entleert werden können. Für den Versand der Schlachtstücke ist es notwendig, diese nach bestimmten Kriterien, wie etwa Gewicht, Fettschichtdicke oder dem pH-Wert des Fleisches zu klassifizieren und entsprechend der jeweilig erfolgten Klassifikation, die Schlachtstücke einem oder mehreren der Stapelgleise zuzuführen. Wegen der Vielzahl der Klassifikationsmöglichkeiten, der damit verbundenen hohen Anzahl von Stapelgleisen und den begrenzten Kühlraumkapazitäten erweist es sich in der Praxis als wesentlich, die Förderung der Schlachtstücke auf den Stapelgleisen so zu gestalten, daß durch eine optimale Ausnutzung der Stapelgleiskapazitäten eine optimale Ausnutzung der Kühlraumkapazitäten ermöglicht wird.

Aus der EP-B1 0 273 154 ist ein Verfahren sowie eine Vorrichtung zum Zwischenspeichern von Schlachttierkörpern auf Stapelgleisen entsprechend den Oberbegriffen der Ansprüche 1 und 7 bekannt. Bei diesem Verfahren soll eine optimale Nutzung der Stapelgleiskapazität dadurch erreicht werden, daß eine nach Ausförderung zu einem Abzugsförderer auf einem Stapelgleis verbliebene Stapelgleismenge vor der nachfolgenden Einförderung weiterer Schlachttierkörper zunächst zum zubringförderseitigen Übergangsförderer hin zurückgefördert wird, damit bei einer nachfolgenden Einförderung ein lückenloser Stapelanschluß entsteht. Zur verfahrensgemäßen Förderung der Schlachtstücke auf dem geradlinig ausgebildeten Stapelgleis ist ein in seiner Förderrichtung umsteuerbarer Stapelgleisförderer vorgesehen.

Zur Realisierung des in seiner Förderrichtung umsteuerbaren Stapelgleisförderers ist es notwendig, entweder zwei in ihrer Drehrichtung unterschiedliche Antriebseinrichtungen oder eine in ihrer Drehrichtung umsteuerbare Antriebseinrichtung für den Stapelgleisförderer vorzusehen. Aufgrund des hiermit verbundenen komplexen Aufbaus der Antriebseinrichtung ist die Realisierung des bekannten Verfahrens mit einem hohen Kostenaufwand für das Antriebssystem verbunden. Die Ansteuerung und der damit verbundene Systemaufwand der Antriebseinrichtung erweist sich als aufwendig, da neben der Vorgabe über die vom Stapelgleisförderer zurückzulegende Bewegungsstrecke als weiterer Steuerparameter für die Ansteuerung die Drehrichtung bei jeder Förderbewegung zu berücksichtigen ist.

Darüber hinaus ist durch die gradlinige Erstreckung des Stapelgleises zwischen dem Zubringförderer und dem Abzugsförderer die maximale Stapelgleiskapazität durch den möglichen Abstand zwischen dem Zubringförderer und dem Abzugsförderer begrenzt.

Der vorliegenden Erfindung liegt daher die Aufgabe zugrunde, ein Verfahren bzw. eine Vorrichtung vorzuschlagen, daß bzw. die einen besonders effektiven und kostengünstigen Betrieb eines Stapelgleisförderers bzw. einer Stapelgleisanordnung ermöglicht.

Diese Aufgabe wird durch die Merkmale der Ansprüche 1 und 7 gelöst.

Das erfindungsgemäße Verfahren ermöglicht es durch die Förderung der Schlachtstücke auf dem Stapelgleis in nur einer Richtung als Antrieb für den Stapelgleisförderer lediglich einen drehrichtungskonstanten Antriebsmotor vorzusehen. Hierdurch entfällt sowohl die Notwendigkeit einen zweiten Antriebsmotor als auch eine komplexe Ansteuerung für die Antriebseinrichtung vorzusehen. Die gegebenenfalls beim Ausfördervorgang notwendig werdende Rückförderbewegung der Schlachtstücke auf dem Stapelgleis wird erfindungsgemäß dadurch ermöglicht, daß die Förderung auf dem Stapelgleis in einer Schleife erfolgt, wobei eine Weichenanordnung vorgesehen ist, die es durch entsprechende Weichenstellung bei der konstant in einer Richtung durchgeführten Förderbewegung ermöglicht, zwischen einer Vorförderung, also in Richtung Abzugsförderer, und einer Rückförderung, also in Richtung Zubringförderer, zu differenzieren.

Durch die in sich geschlossene Ausbildung des Stapelgleises als Schleife ist das Stapelgleis hinsichtlich seiner Aufnahmekapazität nicht auf einen geradlinigen Verbindungsbereich zwischen dem Zubringförderer und dem Abzugsförderer beschränkt, sondern verfügt wegen des nebeneinander Bestehens eines Vorförderbereichs und eines Rückförderbereichs zumindest über die doppelte Stapelgleiskapazität im Vergleich zu der bekannten geradlinigen Ausbildung.

Beim Einfördern einer Einfördermenge vom Zubringförderer auf das Stapelgleis kann die Einfördermenge infolge einer Förderbewegung des Stapelgleisförderers bei einer geöffneten Eingangsweiche soweit eingefördert werden bis sich das letzte Schlachtstück der Einfördermenge auf dem Stapelgleis befindet, wodurch für eine nachfolgende Einförderung ein lückenloser Stapelanschluß gegeben ist. Der Ausfördervorgang kann bei dem erfindungsgemäßen Verfahren so erfolgen, daß eine auf dem Stapelgleis befindliche Stapelgleismenge bei einer geöffneten Ausgangsweiche infolge einer Förderbewegung des Stapelgleisförderers vom Stapelgleis zum Abzugsförderer gefördert wird.

Das erfindungsgemäße Verfahren bietet darüber hinaus jedoch auch die Möglichkeit, für einen lückenlosen Stapelanschluß bei einer Einförderung zu sorgen, wenn nach einem vorhergehenden Ausfördervorgang abzugsförderseitig noch Schlachtstücke auf dem Stapelgleis verblieben sind. In diesem Fall wird nach dem Ausfördern einer Teilmenge der Stapelgleismenge infolge einer Förderbewegung des Stapelgleisförderers bei geöffneter Ausgangsweiche vor dem anschließenden Einfördern die verbliebene Stapelgleismenge bei geschlossener Ausgangsweiche soweit auf dem Stapelgleis gefördert, bis das in Förderrichtung letzte Schlachtstück sich im Vorförderbereich in seiner der Eingangsweiche unmittelbar vorgeordneten Stapelgleisposition befindet.

Darüber hinaus bietet das erfindungsgemäße Verfahren auch Fördermöglichkeiten, die insbesondere bei den bisher bekannten geradlinig zwischen dem Zubringförderer und dem Abzugsförderer ausgerichteten Stapelgleisen nicht vorstellbar waren. Dies betrifft vor allem das Ausfördern einer in Förderrichtung gesehen hinteren Teilmenge einer auf dem Stapelgleis befindlichen Stapelgleismenge. Für diesen Fall des Ausförderns kann zunächst bei geschlossener Ausgangsweiche eine vordere Teilmenge bis einschließlich zum letzten Schlachtstück in den Rückförderbereich gefördert und anschließend bei geöffneter Ausgangsweiche die hintere Teilmenge zum Abzugsförderer ausgefördert werden.

Diese Fördermöglichkeit eröffnet bislang unbekannte Möglichkeiten der Selektierung von Schlachtstücken, die auf ein und demselben Stapelgleis angeordnet sind.

Auch für den Fall, daß eine im Rückförderbereich des Stapelgleises vollständig oder lediglich zu einem Teil angeordnete Stapelgleismenge ausgefördert werden soll, bietet das erfindungsgemäße Verfahren eine Fördermöglichkeit. Hierbei wird die betreffende Stapelgleismenge zunächst bei geschlossener Eingangsweiche bis in den Vorförderbereich gefördert und anschließend bei geöffneter Ausgangsweiche ausgefördert. Die beschriebene Fördermöglichkeit ist sowohl zur Ausförderung der Stapelgleismenge insgesamt als auch zur Ausförderung einer Teilmenge der Stapelgleismenge nutzbar.

Eine Lösung der Erfindung zugrunde liegenden Aufgabe betreffend die Vorrichtung wird durch die Merkmale des Anspruchs 7 gelöst.

Die erfindungsgemäße, zur Durchführung des erfindungsgemäßen Verfahrens geeignete Vorrichtung weist ein Stapelgleis auf, das als öffnen- und schließbare Stapelgleisschleife ausgebildet ist. Durch die Kombination einer Stapelgleisschleife mit einer Weichenanordnung, die ein Öffnen und Schließen der Stapelgleisschleife ermöglicht, ist es möglich, den Stapelgleisförderer lediglich in einer Richtung zu betreiben und trotzdem Vorförderung oder Rückförderung von auf dem Stapelgleis befindlichen Schlachtstücken zu ermöglichen.

Bei einer bevorzugten Ausführungsform der erfindungsgemäßen Vorrichtung weist die Weichenanordnung eine Eingangsweiche und eine Ausgangsweiche auf, wobei durch die Eingangsweiche eine Förderverbindung zwischen der Stapelgleisschleife mit dem zubringförderseitigen Übergangsförderer (Einförderer) und durch die Ausgangsweiche eine Förderverbindung der Stapelgleisschleife mit dem abzugsförderseitigen Übergangsförderer (Ausförderer) ermöglicht ist.

Als besonders vorteilhaft erweist es sich, wenn der Einförderer als Eingangsweiche und/oder der Ausförderer als Ausgangsweiche ausgebildet ist. Durch diese funktionsintegrierte Ausbildung des Einförderers bzw. des Ausförderers ist die erfindungsgemäße Vorrichtung besonders einfach in eine bestehende Stapelgleisanordnung einsetzbar, da unter Beibehaltung des bestehenden Zubringförderers und des Abzugsförderers das als Stapelgleisschleife ausgebildete Stapelgleis samt der Übergangsförderer und des Stapelgleisförderers gegen ein konventionelles Stapelgleis mit den daran angepaßten Übergangsförderern ausgetauscht werden kann.

Die Stapelgleisschleife kann aus zwei parallel zueinander angeordneten Fördergeraden und zwei Förderbögen gebildet sein, die jeweils zwei benachbarte Enden der Fördergeraden miteinander verbinden. Dabei können die Eingangsweiche bzw. die Ausgangsweiche so in die Stapelgleisschleife eingesetzt sein, daß ein zwischen der Eingangsweiche und der Ausgangsweiche vorgesehener Vorförderbereich, in dem die Förderung von Schlachtstücken auf dem Stapelgleis in Richtung Abzugsförderer erfolgt, durch eine Fördergrade und ein zwischen der Ausgangsweiche und der Eingangsweiche vorgesehener Rückförderbereich, in dem eine Förderung der Schlachtstücke in Richtung Zubringförderer erfolgt, durch eine Fördergrade und die beidseitig daran anschließenden Förderbögen gebildet ist. Hierdurch wird zum einen ein besonders einfacher und übersichtlicher Aufbau der Stapelgleisschleife ermöglicht, die eine gute Sichtkontrolle über die auf dem Stapelgleis befindliche Anzahl von Schlachtstücken ermöglicht. Zum anderen kann bei Bedarf durch Öffnen der Eingangsweiche und der Ausgangsweiche eine Stapelgleiskonfiguration geschaffen werden, die einem konventionellen Stapelgleis, also einer geradlinigen Verbindung vom Zubringförderer zum Abzugsförderer, entspricht.

Bei eine besonders vorteilhaften Ausführung der erfindungsgemäßen Vorrichtung ist der Stapelgleisförderer als ein einzelner Endlosförderer ausgebildet, der in einer horizontalen Ebene innerhalb eines von der Stapelgleisschleife begrenzten Innenraums angeordnet ist. Bei einer derartigen Anordnung des mit Mitnehmern versehenen Endlosförderers ist eine im wesentlichen hundertprozentige Ausnutzung der Förderlänge des Förderers möglich. Im Gegensatz zu den konventionellen geradlinig ausgebildeten Stapelgleisen, bei denen die Förderung der Schlachtstücke auf dem Stapelgleis über einen in einer vertikalen Ebene oberhalb des Stapelgleis angeordneten Endlosförderer erfolgt, ist bei der vorteilhaften horizontalen Anordnung des Endlosförderers eine Aufteilung der Förderlänge in ein Fördertrum mit Schlachtstücke transportierenden Mitnehmern und ein Leertrum mit unbelastet mitgeführten Mitnehmern nicht mehr gegeben. Hieraus ergibt sich eine wesentlich erhöhte Nutzung der Förderlänge des Endlosförderers.

Der in einer horizontalen Ebene angeordnete Stapelgleisförderer kann mit sich seitlich vom Fördermittel des Förderers erstreckenden Mitnehmerns versehen sein, die an den auf dem Stapelgleis geführten, die einzelnen Schlachtstücke aufnehmenden Transportelementen angreifen.

Durch die seitlich vom Innenraum der Stapelgleisschleife her an den Transportelementen angreifenden Mitnehmer ist der ohnehin schon durch die Anordnung des Stapelgleisförderers im Innenraum der Schleife geschaffene seitliche Abstand zwischen dem Fördermittel des Stapelgleisförderers und den Schlachtstücken noch weiter vergrößert. Hierdurch ist sichergestellt, daß etwa vom Stapelgleisförderer herab-tropfendes Schmiermittel oder Kondenswasser, das sich im Kühlraumbereich eines Schlachthofs am Stapelgleisförderer bzw. an dessen Fördermittel niederschlägt, nicht auf die durch den Stapelgleisförderer geförderten Schlachtstücke tropft.

Um das außerhalb des Schlachtstückbereichs vom Stapelgleisförderer bzw. dessen Fördermittel herabtropfende Schmiermittel oder Kondenswasser aufzufangen, kann unterhalb des Fördermittels eine Abschirmung angeordnet werden.

Als besonders vorteilhaft erweist es sich, wenn die Abschirmung gleichzeitig als eine Führungs-/Stützeinrichtung ausgebildet ist, die zur führenden und abstützenden Aufnahme des Fördermittels dient. Hierdurch ist es nicht notwendig, für die Abschirmung ein gesondertes Bauteil vorzusehen.

Als besonders geeignet für den bei der erfindungsgemäßen Vorrichtung eingesetzten Stapelgleisförderer erweist es sich, wenn das Fördermittel mit seinem unteren Rand in der gleichzeitig die Abschirmung bildenden Führungs-/Stützeinrichtung und mit seinem oberen Rand in einer Führungseinrichtung geführt ist. Hierbei ragen die Mitnehmer seitlich aus einem zwischen der oberen Führungseinrichtung und der unteren Führungs-/Stützeinrichtung bestehenden Zwischenraum heraus.

Die Führungs-/Stützeinrichtung kann so ausgebildet sein, daß sie einen rinnenartig ausgebildeten, nach oben hin offenen Querschnitt aufweist. Hierdurch ist sichergestellt, daß von dem Stapelgleisförderer in die Abschirmung herabgetropftes Schmiermittel oder auch Kondenswasser nicht unkontrolliert seitlich von der Abschirmung abläuft, sondern sich in dieser sammelt. Darüber hinaus besteht die Möglichkeit, an der derart ausgebildeten Abschirmung zumindest abschnittsweise Abflüsse vorzusehen, an die weiter in den Innenraum der Stapelgleisschleife hineinführende Ableitungseinrichtungen angeschlossen werden können. Hierdurch ist eine gezielte Abführung der in der Abschirmung gesammelten, vom Stapelgleisförderer abgetropften Flüssigkeit möglich.

Nachfolgend wird das erfindungsgemäße Verfahren sowie eine bevorzugte Ausführungsform der erfindungsgemäßen Vorrichtung zur Durchführung des Verfahrens anhand der Zeichnungen näher erläutert. Es zeigen:
- **Fig. 1**: eine mit einem Stapelgleisförderer versehene Stapelgleisschleife in verschiedenen Förderzuständen beim Ein- und Ausfördern einer Schlachtstückmenge;

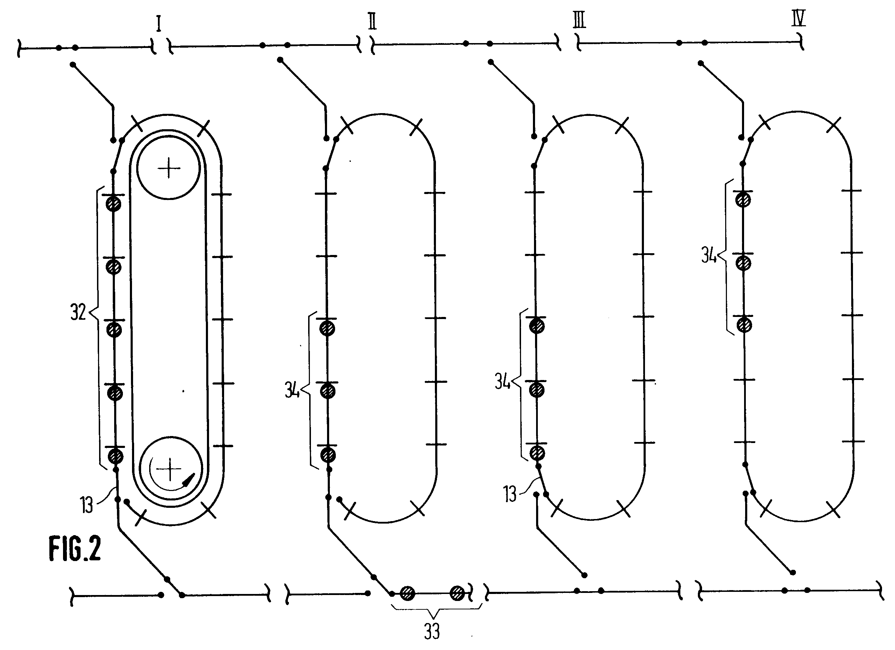

- **Fig. 2**: die Vorrichtung gemäß **Fig. 1** in verschiedenen Förderzuständen beim Ausfördern einer Teilmenge einer auf dem Stapelgleis befindlichen Stapelgleismenge;

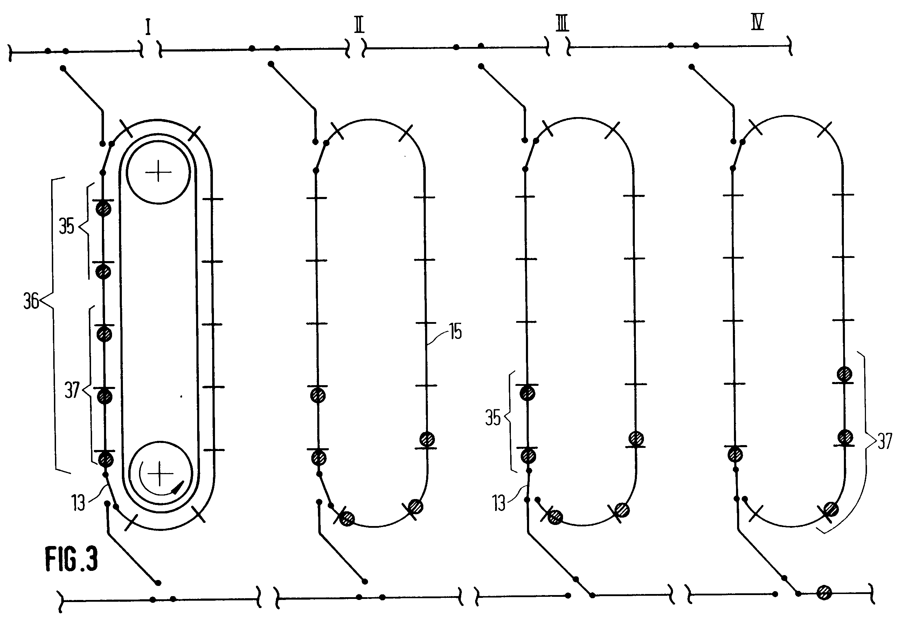

- **Fig. 3**: die Vorrichtung gemäß **Fig. 1** in verschiedenen Förderzuständen beim Ausfördern einer einen hinteren Teil der Stapelgleismenge bildenden Teilmenge;

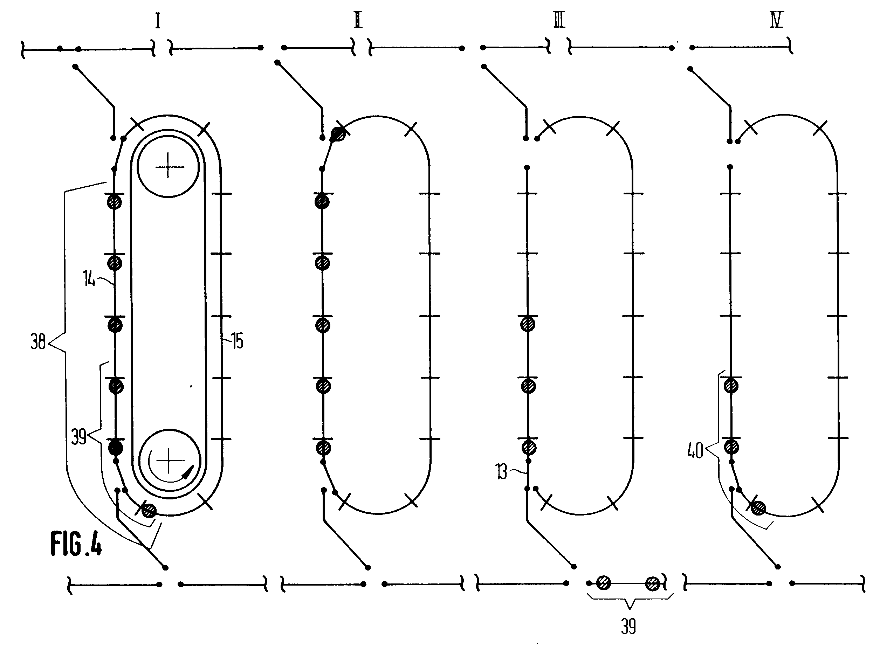

- **Fig. 4**: die Vorrichtung gemäß **Fig. 1** in verschiedenen Förderzuständen beim Ausfördern einer teilweise in einem Rückförderbereich befindlichen vorderen Teilmenge einer Stapelgleismenge;

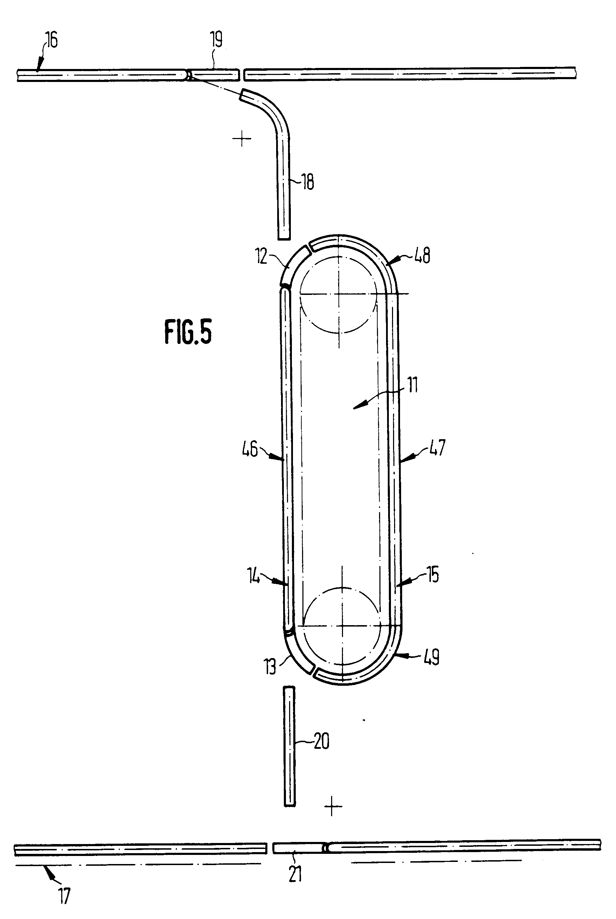

- **Fig. 5**: einen zwischen einem Zubringförderer und dem Stapelgleis angeordneten Übergangsförderer;

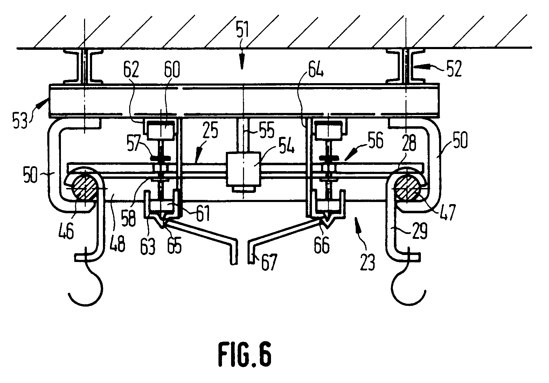

- **Fig. 6**: eine Querschnittsdarstellung eines Stapelgleises mit Stapelgleisförderer gemäß dem in der schematischen Darstellung der Vorrichtung in **Fig. 1** angedeuteten Schnittlinienverlauf VI/VI.

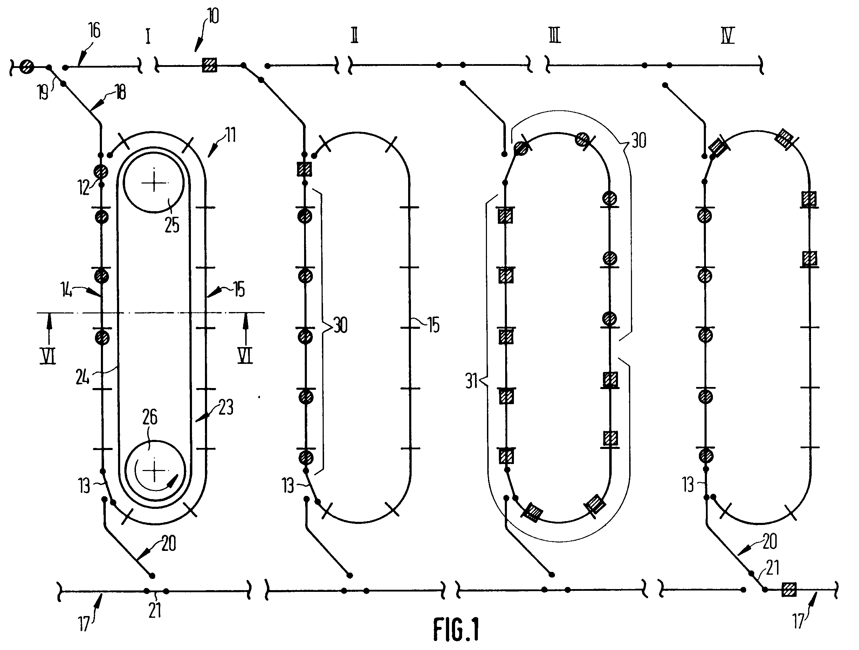

**Fig. 1** zeigt eine Stapelgleisanordnung 10 in verschiedenen Förderzuständen I bis IV. Die Stapelgleisanordnung 10 weist wie unter I dargestellt, eine Stapelgleisschleife 11 auf, die durch eine Weichenanordnung, nämlich eine Eingangsweiche 12 und eine Ausgangsweiche 13 in einen Vorförderbereich 14 und einen Rückförderbereich 15 unterteilt ist. In geöffneter Stellung der Weichen 12 und 13, wie unter I bzw. IV dargestellt, besteht zwischen der Stapelgleisschleife 11 und einem Zubringförderer 16 bzw. einem Abzugsförderer 17 eine Förderverbindung.

Die Förderverbindung zwischen der Eingangsweiche 12 und dem Zubringförderer 16 erfolgt über einen Übergangsförderer 18, der, wie in **Fig**. **1** beispielhaft dargestellt, über eine Zubringfördererweiche 19 in Förderkontakt mit dem Zubringförderer 16 bringbar ist.

Die Förderverbindung zwischen der Ausgangsweiche 13 und dem Abzugsförderer 17 erfolgt über einen Übergangsförderer 20, der analog dem Übergangsförderer 18 mittels einer Weiche, hier eine Abzugsfördererweiche 21, in Förderkontakt mit dem Abzugsförderer 17 bringbar ist.

Die Eingangsweiche 12 und die Zubringfördererweiche 19 bzw. die Ausgangsweiche 13 und die Abzugsfördererweiche 21 werden bei dem dargestellten Ausführungsbeispiel abhängig voneinander betätigt, so daß bei einer Öffnung der Eingangsweiche 12, wie unter I in **Fig**. **1** dargestellt, die Zubringfördererweiche 19 sich ebenfalls in Öffnungsstellung befindet. Gleiches gilt für die Ausgangsweiche 13 und die Abzugsfördererweiche 21, wie unter IV in **Fig**. **1** dargestellt.

Wenn sich sowohl die Eingangsweiche 12 als auch die Ausgangsweiche 13 in Öffnungsstellung befinden, ist eine direkte Förderverbindung zwischen dem Zubringförderer 16 und dem Abzugsförderer 17 über den zubringfördererseitigen Übergangsförderer 18, den bei dem in **Fig**. **1** dargestellten Ausführungsbeispiel geradlinig ausgebildeten Vorförderbereich 14 der Stapelgleisschleife 11 und dem abzugsfördererseitigen Übergangsförderer 20 gegeben. In dieser, in **Fig**. **1** nicht dargestellten Stapelgleiskonfiguration entspricht die erfindungsgemäße Stapelgleisanordnung bezüglich der geradlinigen Verbindung zwischen einem Zubringförderer und einem Abzugsförderer einem herkömmlichen Stapelgleis.

Zur Längsförderung von in **Fig**. **1** schematisch als Punkt oder Quadrat dargestellten Schlachtstücken ist ein Stapelgleisförderer 22 vorgesehen, der in einem zwischen dem Vorförderbereich 14 und dem Rückförderbereich 15 der Stapelgleisschleife 11 ausgebildeten Innenraum 23, oberhalb der Stapelgleisschleife 11 angeordnet ist. Der Stapelgleisförderer 22 ist als Endlosförderer ausgeführt, dessen Fördermittel 24 um zwei Umlenkrollen 25, 26 geführt ist, wobei eine der beiden Umlenkrollen 25, 26, wie durch den Drehrichtungspfeil 27 angedeutet, mit einer hier nicht näher dargestellten, den Stapelgleisförderer 22 in eine Richtung antreibenden Antriebseinrichtung verbunden ist.

Das Fördermittel 24 weist seitlich angeordnete Mitnehmer 28 auf, die hier oberhalb der Stapelgleisschleife 11 angeordnet sind. Die Mitnehmer 28 ragen dabei seitlich soweit vor, daß sie, wie in

**Fig**. **6** dargestellt, auf der Stapelgleisschleife 11 geführte Transporthaken 29 hintergreifen und diese längs der Stapelgleisschleife 11 verschieben können. Die Transporthaken 29 sind in den schematischen Darstellungen gemäß **Fig**. **1** bis **Fig**. **4** zur Vereinfachung als Einheit mit den daran angehängten Schlachtstücken dargestellt.

Aus Gründen der Übersichtlichkeit sind in den **Fig**. **1** bis **4**, die vor allem der Erläuterung des erfindungsgemäßen Verfahrens dienen, der Zubringförderer 16 und der Abzugsförderer 17 nur durch das jeweils zugehörige Fördergleis dargestellt. Tatsächlich ist zumindest der Zubringförderer 16 ebenfalls mit einer Fördereinrichtung versehen, um die Schlachtstücke zu dem hier durch eine abschüssige Gleitstrecke gebildeten Ubergangsförderer 18 hinfördern zu können. Entsprechendes gilt für den abzugsfördererseitigen Übergangsförderer 20.

Nachfolgend soll, beginnend mit **Fig**. **1**, das erfindungsgemäße Verfahren näher erläutert werden:

**Fig**. **1**, I zeigt die Stapelgleisanordnung 10 beim Einfördern einer ersten, durch Punkte dargestellten Schlachtstückmenge 30 auf die Stapelgleisschleife 11. Hierbei sind die Eingangsweiche 12 und die Zubringfördererweiche 19 geöffnet.

Wie unter II dargestellt, erfolgt das Einfördern der Schlachtstückmenge 30 soweit, bis daß in Förderrichtung des Stapelgleisförderers 22 letzte Schlachtstück in den Vorförderbereich 14 der Stapelgleisschleife 11 eingefördert ist. Die Einförderung der einzelnen Schlachtstücke der Schlachtstückmenge 30 in den Vorförderbereich 14 erfolgt dabei durch Mitnahme der an der Eingangsweiche 12 anstehenden Schlachtstücke von den mit dem Fördermittel 24 des Stapelgleisförderers 22 oberhalb der Stapelgleisschleife 11 umlaufenden Mitnehmern 28. Die Mitnehmer 28 können dabei schrittweise oder kontinuierlich vorbewegt werden.

Ausgehend von der unter II dargestellten Konfiguration kann nun lückenlos zur ersten, auf der Stapelgleisschleife 11 befindlichen Schlachtstückmenge 30 eine zweite Schlachtstückmenge 31 auf die Stapelgleisschleife 11 eingefördert werden. Die einzelnen Schlachtstücke der Schlachtstückmenge 31 sind in **Fig**. **1** in Einheit mit den sie tragenden Transporthaken als Quadrate dargestellt.

Bei Einförderung der zweiten Schlachtstückmenge 31 wird die erste Schlachtstückmenge 30 bei geschlossener Ausgangsweiche 13 in den Rückförderbereich 15 der Stapelgleisschleife 11 vorgefördert. Bei gleichzeitigem Einfördern der Schlachtstückmenge 31 kann die Schlachtstückmenge 30 soweit vorgefördert werden, bis, wie unter III dargestellt, die maximale Stapelgleiskapazität der Stapelgleisschleife 11 erreicht ist.

Unter IV ist schließlich der nachfolgende Ausfördervorgang bei geöffneter Ausgangsweiche 13 dargestellt.

**Fig**. **2** zeigt einen Ausfördervorgang, der nach Ausförderung einer Teilmenge einer auf der Stapelgleisschleife 11 angeordneten Stapelgleismenge 32 bei einem nachfolgenden Einfördern einer weiteren Schlachtstückmenge einen lückenlosen Anschluß der weiteren Schlachtstückmenge an die auf der Stapelgleisschleife verbliebene Schlachtstückmenge ermöglicht. Hierzu wird die entsprechend der Darstellung unter I auf der Stapelgleisschleife 11 angeordnete Stapelgleismenge 32 bei geöffneter Ausgangsweiche 13 zunächst soweit ausgefördert, wie es einer gewünschten auszufördernden Teilmenge 33, wie unter II dargestellt, entspricht. Danach erfolgt eine Schließung der Ausgangsweiche 13, so daß nachfolgend eine auf der Stapelgleisschleife 11 verbliebene Stapelgleismenge 34 in den Rückförderbereich 15 gefördert wird. Dabei erfolgt die Förderung der Stapelgleismenge 34 soweit, bis deren in Förderrichtung gesehen letztes Schlachtstück wieder in den Vorförderbereich 14 eingefördert ist. In Öffnungsstellung der Eingangsweiche 12 kann dann eine nachfolgende, hier nicht dargestellte Schlachtstückmenge, unter lückenlosem Anschluß an die Stapelgleismenge 34 durch die Mitnehmer 28 auf die Stapelgleisschleife 11 eingefördert werden.

**Fig**. **3** zeigt den Fall, daß eine in Förderrichtung gesehen hintere Teilmenge 35 einer Stapelgleismenge 36 ausgefördert werden soll. Hierzu wird ausgehend von der unter I dargestellten beispielhaften Konfiguration zunächst eine nicht auszufördernde Teilmenge 37 der Stapelgleismenge 36 bei geschlossener Ausgangsweiche 13 in den Rückförderbereich 15 der Stapelgleisschleife 11, wie unter II dargestellt, eingefördert. Daran anschließend wird, wie unter III dargestellt, bei geöffneter Ausgangsweiche 13 die hintere Teilmenge 35, wie unter IV dargestellt, ausgefördert.

Der beschriebene Ausfördervorgang kann natürlich auch wiederholt ausgeführt werden, so daß gezielt einzelne oder jeweils mehrere Schlachtstücke einer auf der Stapelgleisschleife 11 angeordneten Stapelgleismenge unter Verbleib der übrigen Schlachtstücke auf der Stapelgleisschleife 11 ausgefördert werden können. Die auf der Stapelgleisschleife 11 verbleibende Teilmenge 37 kann bei Bedarf wieder bis in den Vorförderbereich 14 bei geschlossener Eingangsweiche 12 eingefördert werden, so daß bei geöffneter Eingangsweiche 12 eine nachrückende Schlachtstückmenge wieder lückenlos zur Teilmenge 37 auf die Stapelgleisschleife 11 eingefördert werden kann.

**Fig**. **4** zeigt unter I eine Stapelgleiskonfiguration, bei der etwa nach einem vorhergehenden Einfördervorgang einer Schlachtstückmenge eine auf der Stapelgleisschleife 11 angeordnete Stapelgleismenge 38 zu einem Teil in den Rückförderbereich 15 hineinreicht. Zur Ausförderung einer in Förderrichtung gesehen vorderen Teilmenge 39 der Stapelgleismenge 38 wird die Stapelgleismenge 38, wie unter II dargestellt, bis zum Erreichen der Ausgangsweiche 13 durch das erste Schlachtstück der Teilmenge 39 in den Vorförderbereich 14 eingefördert. Bei geöffneter Ausgangsweiche 13 erfolgt anschließend das Ausfördern der Teilmenge 39 (III). Daran anschließend kann, hier unter IV dargestellt, eine verbliebene Stapelgleismenge 40 wieder soweit in der Stapelgleisschleife 11 umgefördert werden, bis das letzte Schlachtstück der Stapelgleismenge 40 in den Vorförderbereich 14 eingefördert ist.

**Fig**. **5** zeigt den Aufbau der Stapelgleisschleife 11 aus zwei zueinander parallelen Fördergeraden 46, 47, die jeweils an ihren Enden über Förderbögen 48, 49 miteinander verbunden sind. Dabei ist der Vorförderbereich 14 durch die Fördergerade 46 und der Rückförderbereich 15 durch die Fördergerade 47 und die anschließenden Förderbögen 48, 49 gebildet.

Die Verbindung der Stapelgleisschleife 11 mit dem Zubringförderer 16 bzw. dem Abzugsförderer 17 erfolgt bei entsprechender Stellung der Weichen 12, 13, 19 und 21 über die Übergangsförderer 18 und 20. Bei dem hier dargestellten Ausführungsbeispiel sind die Übergangsförderer 18 und 20 aus geneigten Förderbahnstücken gebildet, so daß die darauf längsgeförderten Schlachtstücke im wesentlichen aufgrund ihres Eigengewichts gefördert werden und keine besondere Fördereinrichtung etwa nach Art eines Kettenförderers für die Übergangsförderung auf den Übergangsförderern notwendig ist.

**Fig**. **6** zeigt eine mögliche konstruktive Ausführung der in **Fig**. **1** schematisch dargestellten Stapelgleisanordnung in einer Querschnittsdarstellung. Die Stapelgleisschleife 11, die hier als Rohrbahn ausgeführt ist, ist dabei, wie in **Fig**. **1** durch den Schnittlinienverlauf VI-VI dargestellt, im Bereich ihrer Fördergeraden 46, 47 geschnitten. Als weiteren Teil der Stapelgleisschleife 11 zeigt **Fig**. **6** den zubringfördererseitigen Förderbogen 48, der bei hier nicht dargestellter, geschlossener Eingangsweiche die Fördergeraden 46, 47 miteinander verbindet.

Die Stapelgleisschleife 11 ist mittels über ihren Umfang verteilt angeordnete Tragkonsolen 50, von denen in **Fig**. **6** nur zwei dargestellt sind, an einer an der Schlachthofdecke befestigten Haltekonstruktion 51 befestigt. Die hier in beispielhaft dargestellte Haltekonstruktion 51 besteht aus unter der Schlachthofdecke verlaufenden Längsträgern 52, die über Traversen 53 miteinander verbunden sind.

In dem von den Fördergeraden 46, 47 und den Vorderbögen 48, 49 der Stapelgleisschleife 11 begrenzten Innenraum 23 ist der Stapelgleisförderer 22 angeordnet. Wie etwa in **Fig**. **1** unter I dargestellt, weist der Stapelgleisförderer 22 zwei Umlenkrollen 25, 26 auf, von denen die Umlenkrolle 25 in **Fig**. **5** dargestellt ist. Die Umlenkrolle 25 ist mit ihrer Nabe 54 auf einer mit der Traverse 53 verbundenen Drehachse 55 drehbar gelagert. Der Antrieb des Stapelgleisförderers 22 erfolgt über die in **Fig**. **6** nicht dargestellte Umlenkrolle 26 (**Fig**. **1**, I). Auf den Umlenkrollen 25, 26 läuft eine Förderkette 56. Die Förderkette 56 ist, wie auch in **Fig**. **1**, I dargestellt, mit über ihrer Länge verteilt angeordneten Mitnehmern 28 versehen. Die Mitnehmer 28 werden, wie in **Fig**. **6** beispielhaft dargestellt, zwischen Laschen 57, 58 der Förderkette 56 aufgenommen. Im Bereich der Mitnehmer 28 sind die Laschen 57, 58 miteinander verbindende Kettenbolzen 59 über die Laschen 57, 58 hinaus verlängert und dienen zur Aufnahme von Führungsrollen 60 an ihrem einen Ende und Führungs-/Stützrollen 61 an ihrem anderen Ende. Die Führungs-/Stützrollen 61 können auch als Gleitschuhe ausgeführt sein.

Die Führungsrollen 60 und die Führungs-/Stützrollen 61 verlaufen in Führungsschienen 62, 63, die über Tragstreben 64 miteinander verbunden sind, wobei die obere Führungsschiene 62 zur Befestigung der aus den Führungsschienen 62, 63 gebildeten Führungseinrichtung mit den Traversen 53 verbunden ist.

Die untere Führungsschiene 63 ist als Abschirmung ausgebildet, die zur Aufnahme von Substanzen dient, die von der Förderkette 56 oder den mit dieser verbundenen Bauteilen herabfallen oder -tropfen.

Hierbei kann es sich etwa um Kettenschmierfette oder auch Kondenswasser handeln, das sich bei Betrieb des Stapelgleisförderers 22 in einem Kühlraum infolge der Temperaturdifferenz zwischen den aufgeheizt in den Kühlraum transportierten Schlachtstücken und der Kühlraumtemperatur an der Förderkette 56 niederschlägt.

Die unterhalb der Förderkette 56, hier in Form einer gleichzeitig als Führungs-/Stützeinrichtung dienenden Führungsschiene 63, angeordnete Abschirmung verhindert, daß von der Förderkette 56 herabfallende oder -tropfende Substanzen auf die unterhalb der Förderkette 56, an den Transporthaken 29 hängend angeordneten Schlachtstücke gelangen können.

Zur sicheren Aufnahme der erwähnten Substanz ist die Abschirmung, also hier die Führungsschiene 63, mit einer rinnenartigen Vertiefung 65 im Bodenbereich ihres ansonsten U-förmigen Querschnitts versehen. An die rinnenartige Vertiefung 65 der Abschirmung 63 sind über die Länge der Abschirmung 63 verteilt angeordnete Abflüsse 66 mit daran angeschlossenen Ableitungen 67 vorgesehen. Durch die rinnenartige Vertiefung 65 ist sichergestellt, daß etwa in die Abschirmung 63 gelangtes Kondenswasser im wesentlichen vollständig aus dieser in die Ableitungen 67 abgeleitet werden kann. Die Ableitungen 67 sind nach innen geführt, um Kollisionen mit den längs der Stapelgleisschleife 11 geförderten Schlachtstücken auszuschließen.

## Patentansprüche

1. Verfahren zur Beschickung (Einfördern) und Entleerung (Ausfördern) eines Stapelgleises einer zumindest ein Stapelgleis aufweisenden Stapelgleisanordnung (10) zur zwischenlagernden Aufnahme von von einem Zubringförderer (16) zu einem Abzugsförderer (17) zufördernden Objekten, insbesondere von in einem Aufbewahrungsbereich eines Schlachthofs zwischenzulagernden Schlachttierkörpern oder Schlachttierkörperteilen,
wobei eine Förderung der auf einem Stapelgleis angeordneten Objekte mittels umlaufender Mitnehmer eines Stapelgleisförderers (22) erfolgt,
und die einzufördernden Objekte mittels eines ersten Übergangsförderers oder Einförderers (18) vom Zubringförderer (16) auf das Stapelgleis sowie die auszufördernden Objekte mittels eines zweiten Übergangsförderers oder Ausförderers (20) vom Stapelgleis auf den Abzugsförderer (17) übergeben werden,
**dadurch gekennzeichnet,**
daß die Förderung auf dem Stapelgleis in einer in sich schließbaren Stapelgleisschleife (11) in nur einer Richtung erfolgt und das Einfördern von Objekten vom Einförderer (18) sowie das Ausfördern vom Stapelgleis auf den Ausförderer (20) mittels einer einen Rückförderbereich (15) von einem Vorförderbereich (14) abteilenden Weichenanordnung (12,13) erfolgt.

2. Verfahren nach Anspruch 1,
**dadurch gekennzeichnet,**
daß zum Einfördern einer Einfördermenge vom Zubringförderer (16) auf das Stapelgleis (11) die Einfördermenge infolge einer Förderbewegung des Stapelgleisförderers (22) bei geöffneter Eingangsweiche (12) nur soweit eingefördert wird, bis sich das letzte Objekt der Einfördermenge auf dem Stapelgleis (11) befindet.

3. Verfahren nach Anspruch 1,
**dadurch gekennzeichnet,**
daß das Ausfördern einer auf dem Stapelgleis befindlichen Objektmenge oder Stapelgleismenge (32,34,36,38,40) vom Stapelgleis (11) zum Abzugsförderer (17) mittels einer Förderbewegung des Stapelgleisförderers (22) bei geöffneter Ausgangsweiche (13) erfolgt.

4. Verfahren nach Anspruch 3,
**dadurch gekennzeichnet,**
daß nach dem Ausfördern einer Teilmenge (33) der Stapelgleismenge (32) infolge einer Förderbewegung des Stapelgleisförderers (22) bei geöffneter Ausgangsweiche (13) vor einem anschließenden Einfördern die auf dem Stapelgleis (11) verbliebene Stapelgleismenge (34) bei geschlossener Ausgangsweiche (13) soweit gefördert wird, bis das in Förderrichtung letzte Objekt der Stapelgleismenge (34) sich im Vorförderbereich (14) in seiner der Eingangsweiche (12) unmittelbar vorgeordneten Stapelgleisposition befindet.

5. Verfahren nach Anspruch 3,
**dadurch gekennzeichnet,**
daß zum Ausfördern einer in Förderrichtung gesehen hinteren Teilmenge (35) der Stapelgleismenge (36) eine der hinteren Teilmenge (35) in Förderrichtung gesehen vorgeordnete Teilmenge (37) der Stapelgleismenge (36) zunächst bei geschlossener Ausgangsweiche (13) bis einschließlich des letzten Objekts der vorderen Teilmenge (37) in den Rückförderbereich (15) gefördert und anschließend bei geöffneter Ausgangsweiche (13) die hintere Teilmenge (35) ausgefördert wird.

6. Verfahren nach Anspruch 3,
**dadurch gekennzeichnet,**
daß bei Anordnung des in Förderrichtung gesehen ersten Objekts der Stapelgleismenge (38) im Ruckförderbereich (15) zum Ausfördern einer vorderen Teilmenge (39) der Stapelgleismenge (38) die Stapelgleismenge (38) zunächst bei geschlossener Eingangsweiche (12) bis in den Vorförderbereich (14) gefördert und anschließend bei geöffneter Ausgangsweiche (13) ausgefördert wird.

7. Vorrichtung zur zwischenlagernden Aufnahme von von einem Zubringförderer (16) zu einem Abzugsförderer (17) zufördernden Objekten, insbesondere von in einem Aufbewahrungsbereich eines Schlachthofs zwischenzulagernden Schlachttierkörpern oder Schlachttierkörperteilen, mit
- einer zumindest ein Stapelgleis aufweisenden Stapelgleisanordnung (10),
- einem jeweils die auf einem Stapelgleis angeordneten Objekte mittels umlaufender Mitnehmer fördernden Stapelgleisförderer (22), und
- zwischen dem Zubringförderer (16) und dem Stapelgleis einerseits sowie zwischen dem Stapelgleis und dem Abzugsförderer (17) andererseits angeordneten Übergangsförderern (18,20),
**dadurch gekennzeichnet,**
daß das Stapelgleis als mittels einer Weichenanordnung (12,13) öffnen- und schließbare Stapelgleisschleife (11) ausgebildet ist.

8. Vorrichtung nach Anspruch 7,
**dadurch gekennzeichnet,**
daß die Weichenanordnung (12,13) eine Förderverbindung der Stapelgleisschleife (11) mit dem zubringförderseitigen Übergangsförderer oder Einförderer (18) über eine Eingangsweiche (12) und dem abzugsförderseitigen Übergangsförderer oder Ausförderer (20) über eine Ausgangsweiche (13) ermöglicht.

9. Vorrichtung nach Anspruch 8 oder 9,
**dadurch gekennzeichnet,**
daß der Einförderer (18) als Eingangsweiche (12) und/oder der Ausförderer (20) als Ausgangsweiche (13) ausgebildet ist.

10. Vorrichtung nach einem oder mehreren der vorangehenden Ansprüche,
**dadurch gekennzeichnet,**
daß die Stapelgleisschleife (11) zwei im wesentlichen parallel zueinander angeordnete Fördergeraden (46,47) und zwei jeweils zwei benachbarte Enden der Fördergeraden (46,47) miteinander verbindende Förderbögen (48,49) aufweist.

11. Vorrichtung nach Anspruch 10,
**dadurch gekennzeichnet,**
daß ein zwischen der Eingangsweiche (12) und der Ausgangsweiche (13) ausgebildeter Vorförderbereich (14) durch eine Fördergerade (46) und ein zwischen der Ausgangsweiche (13) und der Eingangsweiche (12) ausgebildeter Rückförderbereich (15) durch eine Fördergerade (47) und die beidseitig daran anschließenden Förderbögen (48,49) gebildet ist.

12. Vorrichtung nach einem oder mehreren der vorangehenden Ansprüche,
**dadurch gekennzeichnet,**
daß der vorzugsweise als Endlosförderer ausgebildete Stapelgleisförderer (22) in einer horizontalen Ebene in einem von der Stapelgleisschleife (11) begrenzten Innenraum (23) angeordnet ist.

13. Vorrichtung nach Anspruch 12,
**dadurch gekennzeichnet,**
daß der Stapelgleisförderer (22) von einem, vorzugsweise als Förderkette (56) ausgebildeten Fördermittel (24) angetriebene Mitnehmer (28) aufweist, die vom Innenraum (23) der Stapelgleisschleife (11) her seitlich an vorzugsweise als Transporthaken (29) ausgebildeten Transportelementen angreifen.

14. Vorrichtung nach Anspruch 13,
**dadurch gekennzeichnet,**
daß die Förderkette (56) oberhalb einer Abschirmung (63) geführt ist.

15. Vorrichtung nach Anspruch 14,
**dadurch gekennzeichnet,**
daß die Abschirmung als Führungs-/Stützeinrichtung (63) ausgebildet ist.

16. Vorrichtung nach einem oder mehreren der vorangehenden Ansprüche,
**dadurch gekennzeichnet,**
daß die Förderkette (56) in einer unteren und einer oberen Führungseinrichtung (62,63) geführt ist, wobei die Mitnehmer (28) seitlich aus einem zwischen den Führungseinrichtungen (62,63) bestehenden Zwischenraum herausgeführt sind.

17. Vorrichtung nach Anspruch 15,
**dadurch gekennzeichnet,**
daß die Abschirmung einen Querschnitt mit einer rinnenartig ausgebildeten Vertiefung (65) aufweist.

18. Vorrichtung nach Anspruch 17,
**dadurch gekennzeichnet,**
daß die Abschirmung (63) zumindest abschnittsweise mit Abflüssen (66) versehen ist, an die weiter in den Innenraum (23) hineinführende Ableitungseinrichtungen (67) anschließbar sind.

## Claims

1. A method for charging (conveying in) and emptying (conveying out) a stacking track of a stacking track assembly (10) having at least one stacking track for receiving for temporary storage objects to be conveyed from a feeding conveyor (16) to a discharge conveyor (17), in particular animal bodies or animal body parts to be temporarily stored in a storage area of a slaughterhouse,
the objects disposed on a stacking track being conveyed by means of circulating carriers of a stacking track conveyor (22),
and the objects to be conveyed in being delivered by means of a first transition conveyor or in-conveyor (18) from the feeding conveyor (16) to the stacking track, and the objects to be conveyed out by means of a second transition conveyor or out-conveyor (20) from the stacking track to the discharge conveyor (17),
characterized in that the conveyance on the stacking track takes place in a closable stacking track loop (11) in only one direction, and the objects are conveyed in from the in-conveyor (18) and conveyed out from the stacking track to the out-conveyor (20) by means of a switch assembly (12, 13) dividing a backward conveying area (15) from a forward conveying area (14).

2. The method of claim 1, characterized in that for conveying in a convey-in amount from the feeding conveyor (16) to the stacking track (11) the convey-in amount is conveyed in only so far that the last object of the convey-in amount is located on the stacking track (11) due to a conveying motion of the stacking track conveyor (22) with the incoming switch (12) open.

3. The method of claim 1, characterized in that an amount of objects located on the stacking track or stacking track amount (32, 34, 36, 38, 40) is conveyed out from the stacking track (11) to the discharge conveyor (17) by means of a conveying motion of the stacking track conveyor (22) with the outgoing switch (13) open.

4. The method of claim 3, characterized in that after a partial amount (33) of the stacking track amount (32) is conveyed out due to a conveying motion of the stacking track conveyor (22) with the outgoing switch (13) open, the stacking track amount (34) remaining on the stacking track (11) is conveyed, prior to a subsequent conveying in, so far with the outgoing switch (13) closed that the last object of the stacking track amount (34), regarded in the conveying direction, is located in the forward conveying area (14) in its stacking track position directly preceding the incoming switch (12).

5. The method of claim 3, characterized in that for conveying out a partial amount (35) of the stacking track amount (36) at the back, regarded in the conveying direction, a partial amount (37) of the stacking track amount (36) preceding the back partial amount (35), regarded in the conveying direction, is first conveyed into the backward conveying area (15) up to and including the last object of the front partial amount (37) with the outgoing switch (13) closed, and the back partial amount (3S) then conveyed out with the outgoing switch (13) open.

6. The method of claim 3, characterized in that when the first object of the stacking track amount (38), regarded in the conveying direction, is disposed in the backward conveying area (15) for conveying out a front partial amount (39) of the stacking track amount (38), the stacking track amount (38) is first conveyed into the forward conveying area (14) with the incoming switch (12) closed, and then conveyed out with the outgoing switch (13) open.

7. An apparatus for receiving for temporary storage objects to be conveyed from a feeding conveyor (16) to a discharge conveyor (17), in particular animal bodies or animal body parts to be temporarily stored in a storage area of a slaughterhouse, having
a stacking track assembly (10) having at least one stacking track,
a stacking track conveyor (22) conveying the objects disposed on a stacking track by means of circulating carriers in each case, and
transition conveyors (18, 20) disposed between the feeding conveyor (16) and the stacking track, on the one hand, and between the stacking track and the discharge conveyor (17), on the other hand,
characterized in that the stacking track is formed as a stacking track loop (11) adapted to be opened and closed by means of a switch arrangement (12, 13).

8. The apparatus of claim 7, characterized in that the switch arrangement (12, 13) permits a conveying connection of the stacking track loop (11) with the transition conveyor or in-conveyor (18) on the feeding conveyer side via an incoming switch (12) and the transition conveyor or out-conveyor (20) on the discharge conveyer side via an outgoing switch (13).

9. The apparatus of claim 8 or 9, characterized in that the in-conveyor (18) is formed as an incoming switch (12) and/or the out-conveyor (20) as an outgoing switch (13).

10. The apparatus of one or more of the preceding claims, characterized in that the stacking track loop (11) has two conveying straight lines (46, 47) disposed essentially parallel to each other and two conveying curves (48, 49) interconnecting two adjacent ends of the conveying straight lines (46, 47) in each case.

11. The apparatus of claim 10, characterized in that a forward conveying area (14) formed between the incoming switch (12) and the outgoing switch (13) is constituted by a conveying straight line (46), and a backward conveying area (15) formed between the outgoing switch (13) and the incoming switch (12) by a conveying straight line (47) and the conveying curves adjacent thereto on both sides (48, 49).

12. The apparatus of one or more of the preceding claims, characterized in that the stacking track conveyor (22) formed preferably as an endless conveyor is disposed in a horizontal plane in an interior space (23) limited by the stacking track loop (11).

13. The apparatus of claim 12, characterized in that the stacking track conveyor (22) has carriers (28) driven by conveying means (24) formed preferably as a conveying chain (56) which act from the interior space (23) of the stacking track loop (11) laterally upon transport elements formed preferably as transport hooks (29).

14. The apparatus of claim 13, characterized in that the conveying chain (56) is guided above a screen (63).

15. The apparatus of claim 14, characterized in that the screen is formed as a guide/supporting device (63).

16. The apparatus of one or more of the preceding claims, characterized in that the conveying chain (56) is guided in a lower and an upper guide device (62, 63), the carriers (28) extending laterally out of a space existing between the guide devices (62, 63).

17. The apparatus of claim 15, characterized in that the screen has a cross section with a channel-like depression (65).

18. The apparatus of claim 17, characterized in that the screen (63) is provided at least in sections with outlets (66) with which drain devices (67) leading further into the interior space (23) are adapted to be connected.

## Revendications

1. Procédé de garnissage (introduction) et vidage (évacuation) d'une voie d'empilement, d'un dispositif à voie d'empilement (10) présentant au moins une voie d'empilement, en vue de recevoir pour un stockage intermédiaire depuis un transporteur d'amenée (16) vers un transporteur d'évacuation (17) des objets à transporter en particulier des carcasses d'animaux abattus ou des parties de carcasses d'animaux abattus placées en stockage intermédiaire dans la zone de conservation d'un abattoir,
un transport des objets disposés sur une voie d'empilement s'effectuant au moyen d'organes d'entraînement mis en circulation et appartenant à un transporteur à voie d'empilement (22),
et les objets à introduire par le transport étant transférés au moyen d'un premier transporteur de transfert ou d'un transporteur d'introduction (12) depuis le transporteur d'amenée (16) à la voie d'empilement, ainsi que les objets devant être évacués par le transport étant transférés au moyen d'un deuxième transporteur de transfert ou transporteur d'évacuation (20) de la voie d'empilement au transporteur d'évacuation (17), caractérisé en ce que
le transport sur la voie d'empilement s'effectue sur un trajet bouclé (11) de voie d'empilement, boucle pouvant être refermée, seulement dans un sens, et le transport d'introduction des objets depuis le transporteur d'introduction (18) ainsi que le transport d'évacuation depuis la voie d'empilement sur le transporteur d'évacuation (20) s'effectuant au moyen d'un dispositif à aiguillage (12, 13) permettant une séparation entre une zone de transporteur de retour (15) et une zone de transport de progression (14).

2. Procédé selon la revendication 1, caractérisé en que,
pour assurer le transport d'introduction d'une quantité à introduire, depuis le transporteur d'amenée (16) sur la voie d'empilement (11), la quantité devant être introduite par le transport n'est introduite, par suite d'un déplacement d'avancement du transporteur à voie d'empilement (22), lorsque l'aiguillage d'entrée (12) est ouvert, que jusqu'à ce que le dernier objet appartenant à la quantité à introduire par le transport se trouve sur la voie d'empilement (11).

3. Procédé selon la revendication 1, caractérisé en ce que le transport d'évacuation d'une quantité d'objets se trouvant sur la voie d'empilement ou bien d'une quantité sur voie d'empilement (32, 34, 36, 38, 40) s'effectue depuis la voie d'empilement (11) vers le transporteur d'évacuation (17) au moyen d'un mouvement d'avancement du transporteur de voie d'empilement (22), lorsque l'aiguillage de sortie (13) est ouvert.

4. Procédé selon la revendication 3, caractérisé en ce que, après le transport d'évacuation d'une quantité partielle (33) de la quantité sur voie d'empilement (32), suite à un mouvement de transport fait par le transporteur à voie d'empilement (22), lorsque l'aiguillage de sortie (13) est ouvert, avant une introduction par transport subséquente, la quantité sur voie d'empilement (34) restant sur la voie d'empilement (11) est transportée, alors que l'aiguillage de sortie (13) est fermé, jusqu'à ce que le dernier objet se trouvant dans la direction de transport et appartenant à la quantité sur voie d'empilement (34) se trouve, dans la zone de transport d'avancement (14), dans sa position sur la voie d'empilement située directement devant l'aiguillage d'entrée (12).

5. Procédé selon la revendication 3, caractérisé en ce que, pour assurer le transport d'évacuation d'une quantité partielle (35) se trouvant à l'arrière dans la direction de transport et appartenant à la quantité sur voie d'empilement (36), une quantité partielle (37), se trouvant à l'avant de la quantité partielle arrière (35) lorsqu'on observe dans la direction du transport et appartenant à la quantité sur voie d'empilement (36), est d'abord transportée, lorsque l'aiguillage de sortie (13) est fermé, jusqu'à ce que, y compris le dernier objet, la quantité partielle avant (37) vienne se placer dans la zone de transport de retour (15), puis la quantité partielle arrière (35) est évacuée par transport lorsque l'aiguillage de sortie (13) est ouvert.

6. Procédé selon la revendication 3, caractérisé en ce que
lorsque, en observant dans la direction de transport, la premier objet de la quantité sur voie d'empilement (38), se trouvant dans la zone de transport de retour (15) pour le transport d'évacuation d'une quantité partielle avant (39) de la quantité sur voie d'empilement (38), c'est d'abord la quantité sur voie d'empilement (38) qui est transportée jusqu'à la zone de transport avant (14), lorsque l'aiguillage d'entrée (12) est fermé, puis est évacuée par transport lorsque l'aiguillage de sortie (13) est ouvert.

7. Dispositif de logement de stockage intermédiaire d'objets à transporter d'un transporteur d'amenée (16) à un transporteur d'évacuation (17), en particulier de carcasses d'abattage ou de parties de carcasses d'abattage devant être l'objet d'un stockage intermédiaire dans une zone de conservation d'un abattoir, avec :
- un dispositif sur voie d'empilement (18) présentant au moins une voie d'empilement
- un transporteur à voie d'empilement (22) assurant un transport des objets disposés sur une voie d'empilement, au moyen d'organes d'entraînement mis en circulation, et
- les transporteurs de transfert (18, 20) disposés entre le transporteur d'amenée (16) et la voie d'empilement, d'une part, et ainsi qu'entre la voie d'empilement et le transporteur d'évacuation (17), d'autre part,
caractérisé en ce que la voie d'empilement est réalisée sous la forme d'une boucle de voie d'empilement (11) pavant être ouverte et fermée au moyen d'un dispositif d'aiguillage (12, 13).

8. Dispositif selon la revendication 7, caractérisé en ce que la dispositif d'aiguillage (12, 13) permet une liaison de transport de la boucle de voie d'empilement (11) avec les transporteurs de transfert ou bien transporteurs d'introduction (18) situés du côté du transporteur d'amenée, par l'intermédiaire d'un aiguillage d'entrée (12), et avec les transporteurs de transfert ou la transporteur d'évacuation (20), situé du côté du transporteur d'évacuation, par l'intermédiaire d'un aiguillage de sortie (13).

9. Dispositif salon la revendication 7 ou 8, caractérisé en ce que la transporteur d'introduction (18) est réalisé sous la forme d'un aiguillage d'entrée (12) et/ou la transporteur d'évacuation (20) est réalisé sous la forme d'un aiguillage de sortie (13).

10. Dispositif selon l'une ou plusieurs des revendications précédentes, caractérisé en ce que la boucle de voie d'empilement (11) présente deux parties droites de transport (46, 47) disposées sensiblement parallèlement entre elles et deux arcs de transport (48, 49), assurant la liaison chaque fois de deux extrémités voisines des parties droites de transport (46, 47).

11. Dispositif selon la revendication 10, caractérisé en ce qu'une zone de prétransport (14), réalisée entre l'aiguillage d'entrée (12) et l'aiguillage de sortie (13), est constituée par une partie droite de transport (46) et une zone de transport de retour (15) réalisée entre l'aiguillage de sortie (13) et l'aiguillage d'entrée (12), au moyen d'une partie droite de transport (47) et d'arcs de transport (48, 49) s'y raccordant de part et d'autre.

12. Dispositif selon l'une ou plusieurs des revendications précédentes, caractérisé en ce que le transporteur à voie d'empilement (22), réalisé de préférence sous forme de transporteur continu, est disposé dans un plan horizontal, dans un espace intérieur (23) délimité par la boucle sur voie d'empilement (11).

13. Dispositif selon la revendication 12, caractérisé en ce que le transporteur sur voie d'empilement (22) présente des organes d'entraînement (28) entraînés par un moyen de transport (24), réalisé de préférence sous la forme d'une chaîne de transport (56), organes d'entraînement agissant depuis l'espace intérieur (23) de la boucle de voie d'empilement (11) latéralement sur des éléments de transport réalisés, de préférence, sous la forme de crochets de transport (29).

14. Dispositif selon la revendication 13, caractérisé en ce que la chaîne de transport (56) est guidée au-dessus d'un écran (63).

15. Dispositif selon la revendication 14, caractérisé en ce que l'écran est réalisé sous la forme de dispositifs de guidage/appui (63).

16. Dispositif selon l'une ou plusieurs des revendications précédentes, caractérisé en ce que la chaîne de transport (56) est guidée dans un dispositif de guidage inférieur et supérieur (62, 63), les organes d'entraînement (28) étant sortis latéralement d'un espace intermédiaire constitué entre les dispositifs de guidage (62, 63).

17. Dispositif selon la revendication 15, caractérisé en ce que l'écran a une section transversale dotée d'un creusement (65) réalisé en goulotte.

18. Dispositif selon la revendication 17, caractérisé en ce que l'écran (63) est pourvu, au moins par sections, d'évacuations d'écoulement (66), auxquelles peuvent être raccordés des dispositifs d'évacuation (67) menant plus loin dans l'espace intérieur (23).
